# EUROPEAN PATENT APPLICATION

(11) **EP 2 109 080 A1**
(43) Date of publication of application: **14.10.2009**
(21) Application number: 08007029.5
(22) Date of filing: 09.04.2008
(51) Int. Cl.: G06T 7/00

(54) **A method and device for processing and presenting medical images**

(71) Applicant: IBBT vzw, 9050 Gent (BE); Barco NV, 8500 Kortrijk (BE); Agfa HealthCare N.V., 2640 Mortsel (BE); VRIJE UNIVERSITEIT BRUSSEL, 1050 Brussel (BE)
(72) Inventor: Temmermans, Frederik, 9250 Waasmunster (BE); Deklerck, Rudi, 1800 Vilvoorde (BE); Suliga, Marek, 75 950 Koszalin (PL); Behiels, Gert, 2650 Edegem (BE); Dewaele, Piet, 9100 Sint-Niklaas (BE); Breucq, Cathérine, 3191 Hever (BE); de Mey, Johan, 1700 Dilbeek (BE)
(74) Representative: BiiP cvba

(57) **Abstract**

The present invention relates to a method for processing and presenting at least a first image and a second image, these images being digital medical images. A first step in the method is performing image registration between the first image and the second image to generate a pixel-level mapping between both images a second step is presenting the first image and the second image simultaneously on a display. A third step is presenting a first magnification of a region in the first image and a second magnification of a corresponding region in the second image. The corresponding region in the second image being determined based on the pixel-level registration mapping.

## Description

### Field of the Invention

The present invention generally relates to the presentation of medical images and more in particular to processing and presenting multiple images for diagnostics and computer assisted diagnostics (CAD).

### Background of the Invention

Medical or clinical images such as X-ray images, Computer Tomography (CT) scans, magnetic resonance imaging (MRI), etc. can be obtained by the use of specific devices and yield a specific type of images. The analysis of such images is generally carried out by a skilled person such as a radiologist or a doctor in a relevant field of medicine. The skilled person will typically look at the images and scan them for any irregularities which may provide a clue to the cause of pain or a disease. For instance looking at an X-ray image of an arm or a leg provides sufficient information to determine whether a bone is fractured. Similarly swellings in the tissue such as a tumor or other irregular structures in a particular part of the body can be detected by a visual inspection.

However the process of visually inspecting images and analyzing possible problems can be a time demanding job. For instance a full CT scan of a human body may provide a lot of slices of the scanned human body which each should be inspected by a skilled person. This means that the skilled person has to be focussed for the entire duration of the analysis to avoid errors and to ensure that each possible point of interest is noticed and inspected. In addition, the skilled person or the expert may need to use a magnification glass to view particular details on an image in greater detail. However, when comparing two images, the expert has to look at a detail in one image with his magnification glass, then move the glass to the second image and look for the same detail before he can place his magnification glass on the second image to study the detail. Existing CAD solutions can decrease the duration of an image analysis and can decrease the amount of effort that is needed during the analysis of medical images. Especially in the field of comparing image sets such as temporal mammography sets, CAD systems can be used to display images simultaneously.

An example of a mammography CAD system is given in the US patent US 7,127,684 B2 assigned to GE Informational Systems Technologies Inc. In this US patent there is a system disclosed that is able to display two images of generally similarly shaped objects in a side-by-side view. The system further provides a magnification window which is able to magnify a part of an image as displayed and provides masking options to mask the non-magnified part of the image. The system provides a magnification window on both images, either displayed side-by-side on the same display or each image displayed on a different display which are placed side-by-side.

The operator of the system such as a skilled person or a medical expert is able to move the magnification window on either of the images and the other display window will move accordingly. However in the system as defined in US 7,127,684 the movement of one magnification window is copied to the other magnification window in a pure geometric fashion. For instance, when a temporal set of images from the same breast is displayed, whereby one of the images is mirrored, the movement of one magnification window will cause a mirrored movement of the other magnification window. Thus, if the expert moves a magnification window to the left, the other magnification window will move to the right. Alternatively, when the images are in the same orientation on the screen, the movement of the magnification window is simply copied to the other magnification window. Thus, if the expert moves a magnification window to the left, the other magnification window also moves to the left.

The advantage of this solution is that an expert has both images in front of him simultaneously and that magnifications are shown on both images. This means that the expert no longer has to search for corresponding points of interest in a second image after finding a point of interest in a first image. However, the displays system as described in US 7,127,684 may not always function properly.

Images from different image sets may have significant differences amongst them. For instance a temporal mammography set, which is a number of images taken from the breasts at a first point in time and a number of images taken from the same breasts at a second point in time. Typically such images are taken once every year or two years to provide a view on the evolution over time. Temporal mammography is generally used to track changes in breast structure and keep track of possible irregularities in the tissue such as calcifications and how these irregularities change over time.

A problem with temporal mammography and in general sets of images taken at various points in time, is that the images can be significantly different. Images taken at a later point in time may for instance be made with different equipment, different configuration of equipment, a different medical expert, etc. Different equipment may even introduce a whole new range of different images, for instance when the old equipment produced analog images and the new equipment provides digital images. Images of the old equipment had to be digitized before they can be used in a CAD system. During such digitalization, details may get lost, colours or shade of colours may change, etc. which make the analysis of the image more difficult. Even if images are taken with the same equipment, a difference in configuration may result in significant differences between two images such as a new projection which causes geometric and related radiometric differences. For instance the resolution of the images may change between two points in time where images are taken, the intensity may change, the duration of the image acquisition may change, etc. Such differences and in addition in the field of mammography differences caused by a changed breast position and physical changes in the breast over time result in that the images never map onto each other perfectly.

The system as disclosed in US 7,127,684 displays both images as they are and geometrically replicates the position of one magnification window to the other. However if images are not perfectly the same in size, resolution etc, there may be a difference between the magnified part of the image. Thus, if a medical expert centers a magnification window on a particular point of interest in one image, it is possible that the corresponding location in the other image is not sufficient to accurately view the point of interest therein. For instance, the point of interest which is centered in the first image may not be in the center of the second image or may not even be in the magnification window on the second image at all. This means that the medial expert is unable to determine what the point of interest is and how it has changed since the first image was taken.

Although the solution describes in US 7,127,684 facilitates the comparison of mammogram images which are generally similar, thus with little differences between the images, the solution is not always useable or the displayed information is not always reliable enough for the medical expert to asses the situation. Furthermore, other information such as the size of objects still requires manual effort. For instance, if abnormal tissue is present, the medical expert has to measure the tissue by hand to get an idea of size. The medical expert also may have to measure the same tissue in both images to see how it has evolved over time. This means that although this US patent facilitates analysis as a CAD system, a lot of effort is still needed from the radiologists side.

A solution in a different field of technology is found in the US patent US 7,296,239 which is assigned to Siemens Corporate Research Inc. This patent discloses a system which is used to synchronously display objects in CT volumes and in particular of lung CT volumes. This system enables a physician to locate an object of interest, based upon which a correlation system defines a corresponding volume of interest. For instance, a temporal set of lung CT images or volumes is presented side-by-side. The physician selects an object in a slice of the volume and the system defines a volume corresponding to the volume around the selected object. The system performs image registration of the volume around the selected object and not on the entire image. This is because lung nodules are distinct from their surrounding structures which makes them easy to detect. The system further allows the physician to view a zoom of the selected object in a separate window and may even provide measurements related to the selected object in both images.

The system disclosed in US 7,296,239 is aware of a correlation between objects in the two different images. However, the correlation in this system is based on the location in the slices of an image. This means that the system is aware of which slice is in view whereon the object of interest is selected. The system is then able to determine a volume around that slice wherein the selected object can be found. For similar reasons as those described with respect to the mammogram system above, it is not certain that the selected object can be found entirely within the corresponding volume of interest which is determined by the correlation. In addition, the system only allows the selection of nodules which are clearly distinguishable elements in an image. Some other types of medical images and their analysis however require that a medical expert is able to analyze the surroundings of an object or even parts of the image whereon at first sight there is no distinguishable object.

Furthermore the system is triggered by user interaction. A medical expert of physician has to select an object and only after the selection will the system perform measurements, retrieve the corresponding volume in the other image, etc. This means that the system cannot provide suggestions of interesting objects or volumes to the physician should he require such a suggestion. In addition, this means that the physician has to analyze an image entirely even if he is only interested in particular nodules because the physician has to find that particular nodule before the system can display the corresponding volume in the other image or measurements related to the nodule.

Finally, the system as disclosed in US 7,296,239 is based on medical images which represent a 3D volume of information, typically obtained through CT scans. This means that the system is able to generate a number of 2D slices from the 3D volume through which the medical expert can scroll looking for objects of interest. However applications such as mammography are typically based on 2D objects. The correlation system described in US 7,296,239 is able to find corresponding volumes based on the location in the total volume but cannot find corresponding areas in a 2D image such as a mammogram.

It is an objective of the present invention to provide a method for computer aided diagnostics of medical images which is easy to use and is reliable in presenting information. It is another objective of the present invention to provide a method and system for CAD of medical images which provides sufficient information to the user automatically. It is another objective of the present invention to provide a method for computer aided diagnostics of medical images which reduces the human effort in diagnostics.

### Summary of the Invention

The objectives of the present invention are realized and the shortcomings of the prior art are overcome by a method for processing and presenting at least a first image and a second image, the first image and the second image being digital medical images, the method comprising the steps of:
- performing image registration between the first image and the second image to generate a pixel-level mapping between the first image and the second image;
- presenting the first image and the second image simultaneously on a display; and
- presenting a first magnification of a region in the first image and a second magnification of a corresponding region in the second image, the corresponding region in the second image or the second registered image being determined based on the pixel-level mapping.

Indeed, by performing image registration between the first image and the second image, one of the images is made similar to the other in terms of image characteristics such as resolution, intensity/colour or shades of intensity/colours, size, etc. and the objects in the images are transformed into objects of the same size, orientation and rotation. This also results in a vertical alignment of structures which means that the user is able to compare identical structures on the same vertical level. For instance in the field of temporal mammography this means that the image taken at a previous point in time, called the prior image, and the image taken recently, called the current image, will match each other, and that the same breast in both images is transformed to be identical or close to identical. Thus, the boundaries of the breast are aligned, the position within the image is the same, the size is the same, etc. The mapping resulting from the registration enables the determination of a correspondence at the pixel-level of the two images. In the example of temporal mammography this means that each pixel in the current image is mapped onto a pixel of the prior image.

The resulting pixel mapping provides valuable information when comparing images such as prior and current images in temporal mammography analysis. It provides a way of determining which part of the first image corresponds exactly to which part in the second image. This in turn is valuable information when presenting images to a medical expert or physician for review.

The magnification windows on both images are linked to each other. This means that if a user or medical expert moves one magnification window over the first or second image, being a registered image or not, the magnification window on the other image moves accordingly. However, compared to the prior art solutions, the magnification windows do not necessarily move in a geometric consistent way. In the example of temporal mammography this means that the prior and current images are registered and a pixel-level mapping is determined. Then the original prior and current images can be presented to a medical expert in a side-by-side view which facilitates comparison. A magnification window is presented on both the prior image and the current image which show a part of the image in greater detail. When the medical expert moves the magnification window on the prior image, the magnification window on the current image moves accordingly and vice versa, based on the pixel-level mapping.

Linking these magnification windows based on the pixel-level mapping means that the system is able to show the correct part of both images simultaneously. For instance, if the user or a medical expert moves the magnification window on the first image to a part of that first image, it is possible to determine the corresponding pixels in the second image. The result is that the magnification windows may not appear on the same place relative to the boundaries of the images, but the contents of the magnification windows will correspond in both images. The contents should not be considered as tissue, bones, foreign matter, calcifications etc but rather as a part of the image such as a particular area of a breast in a mammography in the case of pixel-level mapping.

Although mammography is used when giving examples, this is only a specific type of medical image that can be assessed using this method. It is a typical example because medical analysis of mammography images is often based on temporal studies over time and the comparison of such studies. However the method can also be applied to non-temporal images such as a left/right study. In addition, other medical images can be assessed in this way. In general, any medical image on which a comparison is made can be assessed using this method. Some of these medical images may not even require extensive registration because there are hardly any or no differences between the images.

Optionally the method for processing and presenting at least a first image and a second image according to the present invention further comprises the step of detecting regions of interest in said first image and/or said second image and the step of determining a region-level correspondence between said first image and said second image based on said regions of interest and/or said pixel-level mapping.

Further optionally in the method for processing and presenting at least a first image and a second image according to the present invention, the regions of interest comprise one or more of the following:
- a micro-calcification;
- a cluster of micro-calcifications; and
- a mass.

During the analysis of medical images, an expert or a user is generally looking for irregularities or elements which point towards a problem or the cause of a problem. This means that the expert is generally most interested in regions with these elements and not in the regions of the image where everything is normal. By analyzing the medical images after their registration, it is possible to detect certain structures therein which may point to a particular problem. For instance in the field of mammography, a medical expert may typically look for signs of micro-calcifications or clusters of micro-calcifications. By using a system which locates these structures in the images, it is possible to map structures in the same locations to each other. For instance micro-calcfications have specific characteristics which can easily be detected by some digital image processing algorithms.

By mapping regions of interest between the two images, it is possible to provide a medical expert with the interesting parts of the image upon request. I n other words, a medical expert is able to assess all the important regions of an image without the need to look at the entire image. Of course, if the user or medical expert desires to do so, he is still able to inspect each part of the images to ensure that he did not miss anything.

Optionally in the method for processing and presenting at least a first image and a second image according to the present invention, the mapping of the regions of interest is based on one or more of the following:
- Markov Random Field graph matching;
- a feature-based comparison algorithm; and
- a probabilistic comparison algorithm.

One way of storing the information related to the detected structures in each image is by generating a graph for each image. Such graphs may for instance represent information on how particular structures, which are nodes in the graphs, are positioned relative to each other. Once a graph is established for each of the images, it is possible to compare these graphs using the Markov Random Field graph matching technique. Corresponding structures can then be linked to each other meaning that it is possible to determine which structure in the first image corresponds to which structure in the second image. An alternative to Markov Random Field is for instance an algorithm which is based on recognition of features such as calcifications in images and then is able to compare features in both images. Based on such comparison, the algorithm may be able to determine corresponding regions of interest in both images.

Of course this graph matching technique is meant to match regions of interest that are identical. A typical part of medical image analysis and in particular temporal mammography studies is to compare structures over time to determine their evolution over time. The graph matching should therefore be flexible enough to map structures onto each other which are not identical but which are the same structure. An alternative way of mapping structures is using a probabilistic method based on overlap and proximity of structures in the registered images.

Optionally in the method for processing and presenting at least a first image and a second image according to the present invention, the image registration comprises one or more of the following:
- vertical alignment of the first image and the second image;
- affine transformation of the first image and/or the second image;
- mapping the boundaries of the first image to the boundaries in the second image or vice versa;
- interpolating the interior part within said boundaries of the first image and/or the second image;
- additional mapping of the said corresponding regions of interest; and interpolating the remaining areas in the breast; and
- higher-order deformable or elastic transformation of the first image to the second image or vice versa.

Optionally the method for processing and presenting at least a first image and a second image according to the present invention further comprises the step of determining statistical information and/or measurements related to the region in the first image or the first registered image and the corresponding region in the second image or the second registered image.

Further optionally the method for processing and presenting at least a first image and a second image according to the present invention comprises the step of presenting the statistical information and/or the measurements in conjunction with the first magnification and/or the second magnification.

Indeed, it may be possible to automatically gather information about elements in a particular region of an image. For instance it is possible to count the number of micro-calcfications in a particular part of a mammography. This information can be retrieved from the original images but may as well be retrieved during a region of interest mapping or can be retrieved from the graph wherein the regions of interest are stored. In general such information can be shown next to the images, in a magnification window or even in a separate window on each of the presented images. This information can consists of the number of structures in a regions of interest detected, what kind of structures in a region of interest are detected, the size of particular structures or regions, etc. In addition, when measurements are performed on both images, it is also possible to automatically determine the changes over time. It is possible to compare for instance a number of structures in one region of interest at different points in time to determine whether the number has increased or decreased. For instance, it is possible to determine whether the number of micro-calcifications in a cluster has increased or decreased over time. It may also be possible to measure the size of particular structures such as the size of a tumor to determine whether the tumor has grown over time.

Showing such information on top of the images, in the magnification windows or a separate window make it easy for a medical expert to make a diagnosis or to determine how well treatment has an effect on a particular structure or disease. In addition, the medical expert no longer needs to perform measurements by hand, count the number of elements in a region etc. which reduces the time needed for the analysis

Optionally the method for processing and presenting at least a first image and a second image according to the present invention further comprises the step of receiving user input for selecting the region in the first image or the first registered image.

Although the method as described above can be used to automatically display particular regions of interest of medical images which should be considered by a user or a medical expert, it may be convenient to enable such a user or expert to select the region of interest he wishes to inspect. A user may be able to point at a particular region of interest in order to centre a magnification window around that point. Alternatively the user may be able to drag the magnification window to the region of his choice to have a closer look on that region.

Optionally the method for processing and presenting at least a first image and a second image according to the present invention further comprises the step of iteratively presenting a region in the first image or the first registered image and a corresponding region in the second image or the second registered image, the region in the first image or the first registered image being automatically selected from a list of regions in the first image or the first registered image.

After the image registration to obtain a pixel-level mapping and if applicable a region of interest correspondence analysis and the creation of for instance a graph with information related to all the existing regions of interest, it may be possible to view all the regions of interest in a discrete mode. During discrete mode it is possible to automatically iterate through all the nodes of the graph. The user or a medical expert may start the iteration process upon which a first region of interest is automatically selected. The first region of interest contains one or more structures or elements which should be inspected by the expert or user. In addition to the first region of interest, the corresponding region of interest in the second image is automatically presented as well. Both regions of interest can then be presented in their respective magnification window for better viewing and analysis, with or without relevant information such as measurements and statistical information. Once the user has analyzed the first selection, he can continue to a second selection, for instance by pressing a button on a keyboard or a mouse or a button on a dedicated control panel. The user can iterate through all available structures or nodes in a graph this way and move forward or backward through the list.

The region of interest mapping may also provide a list of regions which is separated from the graph, i.e. the graph may only be used for mapping regions whereas information related to their position can be stored in a separate file or data structure. This way it may be possible to map regions of interest and store the mapped information for use in different appliances or tools.

Optionally the method for processing and presenting at least a first image and a second image according to the present invention further comprises the step of automatically moving the region in the first image or the first registered image and presenting the corresponding region in the second image or the second registered image.

As an alternative to a discrete mode, it may be possible to move over the image in a specific path to view the entire image over time in a magnification window rather than just a few selected regions. The magnification window may move automatically over the image in a horizontal or vertical movement. Each horizontal or vertical strip of the image may partially overlap the other strip or the strips may be placed next to each other. Another possibility is that a user is able to define a path over which the magnification window moves, for instance by specifying a start point and an end point between which a straight path is automatically generated. Such a path may also include additional waypoints along which the magnification window passes. The user may define such a path in either of the images and the magnification window on both images will move accordingly. There may be a way for a user to stop the movement once a structure appears in the magnification window and the user may be able to resume the movement when he desires.

Optionally in the method for processing and presenting at least a first image and a second image according to the present invention, the medical digital images are one or more of the following:
- temporal mammography images;
- a left and a right breast mammography image;
- Cranio-Caudal projections of a breast;
- Medio-Lateral Oblique projections of a breast; and
- a registered version of said first image and/or a registered version of said second image obtained by applying said pixel-level mapping to said first image and/or said second image respectively.

A typical field wherein the present invention can be used is the field of breast examination and more in particular mammography. Mammographic studies are made up out of a number of images such as a Cranio-Caudal (CC) projection of each of the breasts of a person and a Medio-Lateral Oblique (MLO) projection of each of the breasts. These views respectively constitute a horizontal and a vertical view of the breast. During a study, these projections are made of both the left and the right breast. Thus, a single study contains four images, a CC and an MLO projection of the left breast and a CC and an MLO projection of the right breast. A temporal study contains at least two studies taken at different points in time, for instance in intervals of a year or two years. However, in some cases the timeframe between two studies may be larger or smaller, for instance to determine short term evolution.

In a typical scenario it may be beneficial to compare the same type of images from a temporal set. Thus it is most beneficial to compare two CC or MLO projections of the same breast at a different point in time. However sometimes it may be needed or desired to compare a specific view of a left and right breast at the same point in time with each other. A medical expert may also desire to compare a CC projection and an MLO projection of the same breast at the same point in time, for instance to have a closer look at a structure from two different points of view.

It is possible to present the registered images to a medical expert which provides the expert with a view on two images for comparison thereof. To facilitate the examination of such images, a magnification window is provided on both images. This way the expert is able to have a more detailed look at parts of an image without the need for additional tools such as a magnification glass. By presenting a magnification window on both images, the expert does not have to move the magnification window between the two images which reduces the time to compare details. However, images may be deformed during the registration phase which means that presenting registered images may result in incorrect or incomplete images being shown. A medical expert may therefore not be able to asses the contents of these images correctly which is unacceptable. It may therefore be advantageous to present the original images to the medical expert or a person looking at the images and present the magnification windows on these original images. Of course it may be possible for a user or a medical expert to select which images are displayed. It may even be possible to present an image in its original form and registered form if the user desires so.

The present invention further relates to a device for presenting at least a first image and a second image, the images being digital medical images and the device comprising:
- means for presenting the first image and the second image on a display;
- means for presenting a first magnification of a region in the first image and presenting a second magnification of a corresponding region in the second image wherein the corresponding region is determined based on a pixel-level registration mapping.

The device is able to present images on one or more displays. In case of a single physical display, the display may be divided in two or more parts depending on the number of images that should be presented. Each part of the display may then be used to present an image to a user. In addition to the image, each part provides its own magnification window on the presented image. However the device may also offer multiple displays for presenting the images. In such case each image may present a single image, or more than one image when the device is used to compare three or more images. Alternatively the device may present both the CC and MLO projection of a breast of two points in time simultaneously. On a single display device this means that the display is divided into four parts, two for the prior and current CC projection and two for the prior and current MLO projection. In such case the CC projections may be displayed side-by-side and the MLO projections may be displayed side-by-side. The four images may be arranged next to each other or in a matrix style with for instance the CC projections on top and the MLO projections at the bottom or vice versa. In case of a dual-display device, one device may be used for the CC projections and one display may be used for the MLO projections. Alternatively one display may be used for both current projections and the other display may be used for the prior projections. In general various combinations of the presented images are possible and the use of one or more displays can be considered in various combinations. Generally there will be multiple images presented with their respective magnification windows and similar images or images linked to each other in a particular content will have their magnification windows linked to each other to ensure that corresponding regions are always shown simultaneously.

The device presents corresponding regions to the user in a way similar as described with respect to the method above. Thus the device provides the same advantages of the pixel mapping or region-level correspondences as described above.

Optionally the device for presenting at least a first image and a second image according to the present invention further comprises means for performing image registration between the first image and the second image to generate a pixel-level mapping between the first image and the second image.

Further optionally the device for presenting at least a first image and a second image according to the present invention comprises means for receiving information related to the pixel-level mapping between the first image and the second image.

Further optionally the device for presenting at least a first image and a second image according to the present invention comprises means for receiving information related to the detection of regions of interest in the first image and/or the second image and/or information related to the correspondence of the regions of interest in the first image and/or the second image.

The device according to the present invention presents magnification windows on the images wherein the magnified regions correspond to each other. The correspondence between the regions is based on a mapping at the pixel-level between the two images. The mapping at the pixel-level is the result of the registration method. In an alternative mode, the correspondence between regions of interest can be determined at region level.

A first possibility is that the device has the means to determine the mapping by processing the images. In that case, the device first performs an image registration between both images to obtain a pixel-level mapping. The mapping can be applied to one of both images to obtain registered images which are uniform in characteristics.

The second possibility is that the device is only used for presenting the images and the magnification windows, and that the device receives the mapping/correspondence information from an external source. For instance, there may be a different device which is purely designed for image processing that registers the images and determines the pixel-level mapping. This device may then be able to store information obtained by the registration and provide that information to the device according to the present invention. The display device can then take the original images, present them and use the information from the second device to determine corresponding regions for presenting these regions in the magnification windows. This may for instance be used in a scenario where a hospital keeps all the images taken from their patients and provides the mapping/correspondence information along with the images in digital format to the physician of a patient. This way the patient can leave a hospital after getting the images taken and the patient can visit their own physician for the results.

### Brief Description of the Drawings

Fig. 1 illustrates an overview of a display in an embodiment of the present invention;
Fig. 2a - 2d illustrate examples of operational modes of a device according to the present invention; and
Fig. 3 illustrates a functional block diagram of an embodiment of the present invention.

### Detailed Description of Embodiment(s)

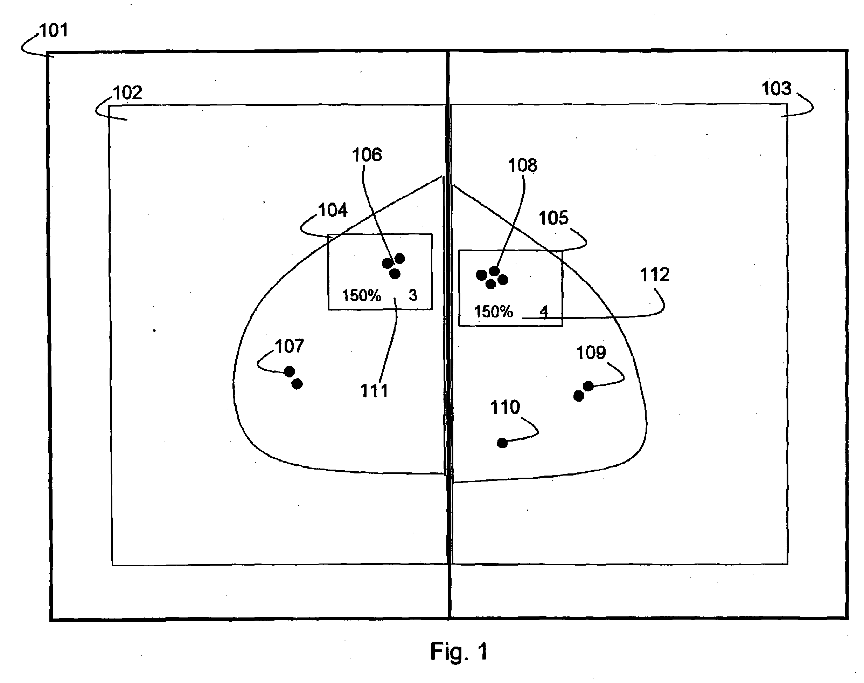

Fig. 1 illustrates a display 101 whereon two images 102 and 103 are presented. The image 102 and 103 are related to the right breast of a woman and show a medio-lateral oblique projection of the same breast. Image 102 is the current image which was taken recently whereas image 103 is the prior image which was taken at an earlier point in time, typically a year or two earlier. The display further presents a magnification window 104 on the current image 102 and a magnification window 105 on the prior image 103. Each of the images 102 and 103 in this particular example show a number of micro-calcifications 106 - 110. The current image 102 shows two locations with micro-calcifications 106 and 107. The prior image 103 shows three locations with micro-calcifications 108, 109 and 110.

In this example it is assumed that the current image 102 and the prior image 103 have been processed before being presented on the display 101. Thus the images 102 and 103 have gone through a registration phase, a region of interest detection and region correspondence analysis has taken place before the presentation of the images 102 and 103. This means that a medical expert is able to select a region in either of the images 102 and 103 to move the magnification windows 104 and 105 to those regions. The system moves the magnification window 104 or 105 of the image 102 or 103 whereon the region is selected to that region within the image 102 or 103 and the respective magnification window 104 or 105 on the other image is moved based on the mapping at the pixel-level between the images 102 and 103 and not based on the selected location relative to the boundaries of the image 102 or 103. Thus, if a medical expert selects the region around micro-calcifications 107 in the current image 103, the magnification window 104 is moved to that location to present a magnification of micro-calcifications 107. However on the prior image 102, the magnification window 105 is moved based on the mapping at the pixel-level between the images to the region with micro-calcifications 109. Note that the magnification windows 104 and 105 may not be perfectly aligned with each other or be in the same position relative to the boundaries of the images 102 and 103 or the display 101. However, the magnification window 105 is placed in the same position relative to micro-calcifications 109 as magnification window 104 is placed relative to micro-calcifications 107. This enables the medical expert to study the micro-calcifications 107 and 109 in detail while being sure that they are centred in the magnification windows 104 and 105.

The images 102 and 103 show the same breast at various points in time and in this example the number of micro-calcifications has changed over time. For instance micro-calcifications 108 have decreased in number as can be seen in micro-calcfications 106. Inside magnification window 104, additional information 111 is presented. In this particular example it shows a magnification of 150% and that 3 micro-calcifications are detected in this region. Similarly the magnification window 105 displays additional information 112 such as a magnification of 150% and that 4 micro-calcifications are detected in this region. The medical expert is thus able to see that the cluster of micro-calafications has decreased over time by 1, only by looking at the additional information 111 and 112. Of course more information could be presented as additional information 111 and 112. For instance it may list the change in number of a micro-calcification cluster, the type of objects detected therein, the size of one or more objects in the magnification window, changes in size of objects, etc. Additional information 111 and 112 may also include a visual marking of the detected micro-calcfications if the medical expert desires so.

When moving the magnification window 102 to micro-calcificatlons 107 and having the device moving magnification window 103 automatically to micro-calcifications 109, the additional information 111 and 112 can be updated automatically. In this case the number of micro-calcifications is the same thus the additional information 111 and 112 would reflect that, for instance by listing the same number of micro-calcifications or a change of zero. Similarly the system could illustrate that micro-calcification 110 has disappeared if the expert magnifies the region around micro-calcification 110 because there is no corresponding object in the current image 102.

Although the example in Fig. 1 illustrates a single display 101 with two images 102 and 103 shown thereon, it should be noted that each image may be presented on its own display as well. This way the images 102 and 103 can be presented at a larger scale which may facilitate the analysis of the images 102 and 103. The medical expert or a user of the system may select a region using an input device such as a computer mouse, a trackball or other device which can direct an on-screen pointer. Alternatively the medical expert can command the system using buttons on a keyboard or a dedicated control panel.

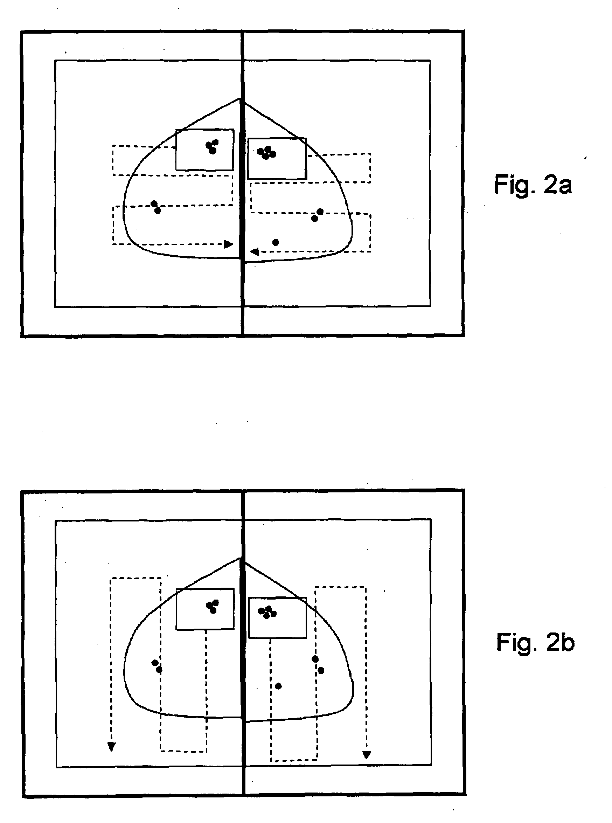

Fig. 2a to 2d illustrate various operational modes of an embodiment of the present invention. Fig. 2a illustrates an operational mode wherein the magnification window moves over the image in a horizontal path which is indicated in a dashed line. The window moves from one side to the other, moves down and moves back, repeating this motion until the entire breast has been displayed. Of course, for detailed analysis the medical expert needs to be able to pause the motion. This may for instance be done using a button on a control panel or an input device. Fig. 2b illustrates a similar operational mode but with a vertical movement over the images which is indicated by a dashed line. The image moves down, to the left or right and moves back up again. The exact movement of the magnification windows is however not limited to side-to-side and downwards or downwards and left or right. It depends on where the magnification window is located when such a movement is started. For instance if the magnification window starts in a bottom corner, the first movement may be upwards and not downwards for a vertical movement and the window may move up instead of down in case of a vertical movement. In general the magnification window can move over an image in a systematic way following a path which covers the entire image with the magnification window.

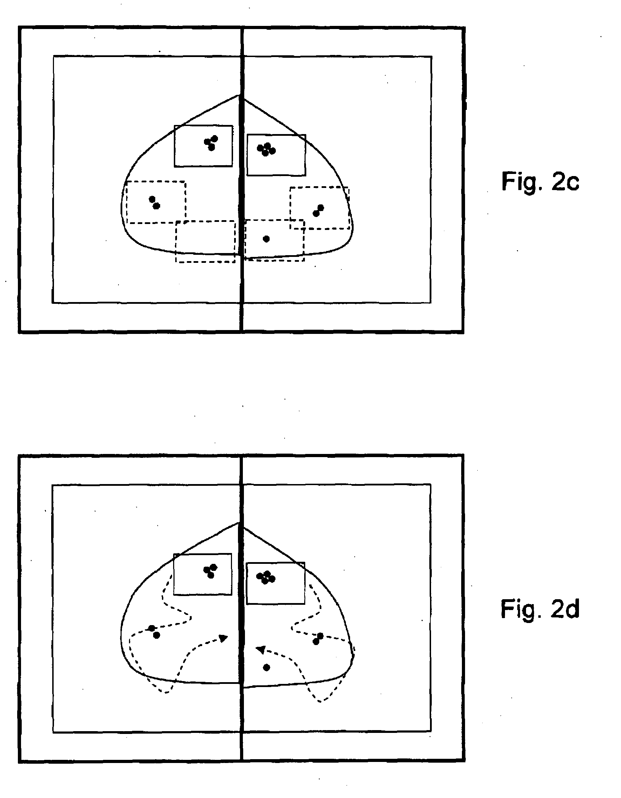

Fig. 2c illustrates a discrete operating mode of the system. In this mode, the system is aware of any locations where objects of interest can be found such as micro-calcifications. The user or medical expert is able to browse through these locations for instance by a simple press of a key. The system then moves the magnification window to the next location. In this figure, the magnification window is at the first location with micro-calcifications. The boxes in dashed line represent the other locations whereto the magnification windows can move upon request by the medical expert or the user. These regions may all be completely distinct areas in the images or there may be an overlap between the regions.

Fig. 2d illustrates a random operating mode of the system. In this mode, a user moves one of the magnification windows according to a random path over the image. The movement path is drawn in Fig. 2d as a dashed arrow which indicates the movement direction and path. The other magnification window, which is moved by the system to the position corresponding to the position of the other magnification window, may move synchronously with the magnification window under control of the user or there may be a delay. For instance if the user moves a magnification window, the system may need some time to calculate the corresponding region in the other magnification window. Of course, the shorter the delay between the movement by a user and the movement by the system, the better it is for the user to maintain an overview.

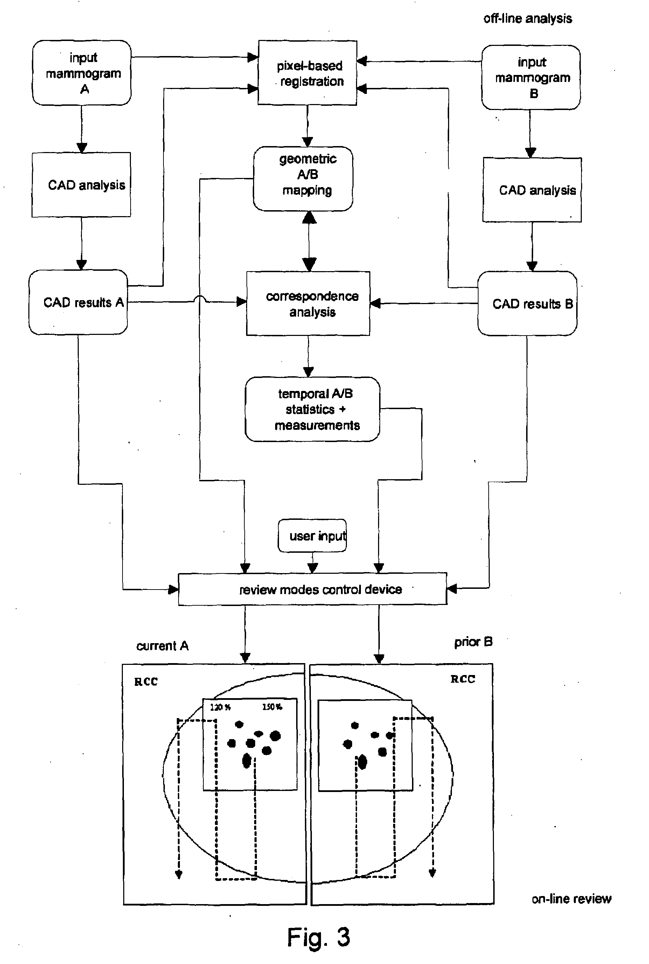

Fig. 3 illustrates a flow-chart of an embodiment of the method according to the present invention. Fig. 3 shows an off-line and an on-line analysis block which each consist of a number of functions. The off-line analysis block is involved in registration, detection, and analysis of medical images such as mammogram images. The on-line analysis block is involved in the presentation of these images and the analysis thereof.

The off-line analysis takes two input mammogram images A and B which are used as input for a global image registration and which are used as input for the CAD analysis. These mammogram images A and B can be projections of the same breast at various points in time, projections of the same breast in different views, a left and right breast, etc. The (global) image registration is applied to the pair of images A and B to align A with B or vice versa. The global image registration or pixel-based registration is applied to obtain two images which correspond to each other in form, dimension and image characteristics such as intensity, resolution, rotation, etc. The image registration contains steps such as a vertical alignment of the images, an affine transformation of the images, alignment of boundaries and/or interpolation in the interior part of the images, deformable or elastic transformation of the first or second image, etc.

The CAD analysis results of image A and B can also be used as input for the global image registration. Such results may for instance include detected structures, image boundaries, etc. which can be registered to obtain an improved geometric mapping. The geometric mapping maps pixels between images, however it does not determine the correspondence between objects. Thus, the correspondence analysis takes the geometric A/B mapping and the regions of interest detected with the CAD algorithm as input and determines which regions of interest are related to which regions of interest. This means that the correspondence analysis determines which micro-calcification in image A corresponds to which micro-calcification in image B. The correspondence analysis further determines which micro-calcifications belong to the same cluster of micro-calcifications. This provides the information needed to present corresponding regions to a user in both images with respect to the contents of the images and not to the location within that image. Corresponding regions and micro-calcifications can be obtained via Markov Random Fields graph matching or feature based correspondence matching. In this particular embodiment, the correspondence analysis information is used to perform measurements of structures in the images and to measure distances and sizes of such structures.

The information obtained during the off-line analysis is used for presenting images A and B to a user by the on-line analysis block. The main part of this block is a display able to present these two images, either a single image which is divided into two areas or two displays, each used for an image. These displays are controlled by the review modes control device. This device receives user input, the CAD analysis results, the temporal A/B statistics and measurements and the geometric mapping information. This information is then combined with the original images and presented on the display. This particular example shows two images being presented in a mode wherein the system moves the magnification windows over the images along a predefined path. However the review modes control device may be able to switch between various display modes such as those illustrated with respect to Fig. 2a - 2d.

The review modes control device may not control the presentation of images directly. It may for instance interact with software and/or hardware on the display device which in turn controls the actual presentation. In such case the review modes control device is only responsible for providing information to be displayed to the user. The user input may be received from a keyboard and/or computer mouse when the on-line analysis is performed on a regular computer, dedicated input devices for a special image analysis terminal, etc.

It should be noted that the off-line and on-line analysis blocks may be part of a single device or piece of software running on a computer or server or that they may be divided over two or more different hardware devices and/or software programs. Some of the blocks in Fig. 3 may also be combined into a single functional block. For instance there may be a single CAD analysis block which performs CAD analysis for images A and B simultaneously or sequentially.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for processing and presenting at least a first image and a second image, said first image and said second image being digital medical images, said method comprising the steps of:
- performing image registration between said first image and said second image to generate a pixel-level mapping between said first image and said second image;
- presenting said first image and said second image simultaneously on a display; and
- presenting a first magnification of a region in said first image and a second magnification of a corresponding region in said second image, said corresponding region in said second image being determined based on said pixel-level mapping.

2. The method for processing and presenting at least a first image and a second image according to claim 1 wherein said method further comprises the step of detecting regions of interest in said first image and/or in said second image and the step of determining a region-level correspondence between said first image and said second image based on said regions of interest and/or said pixel-level mapping.

3. The method for processing and presenting at least a first image and a second image according to claim 2 wherein said regions of interest comprise one or more of the following:
- a micro-calcification;
- a cluster of micro-calcifications; and
- a mass.

4. The method for processing and presenting at least a first image and a second image according to claim 2 wherein said mapping of said regions of interest is based on one or more of the following:
- Markov Random Field graph matching;
- a feature-based comparison algorithm; and
- a probabilistic comparison algorithm.

5. The method for processing and presenting at least a first image and a second image according to claim 1 wherein said image registration comprises one or more of the following:
- vertical alignment of said first image and said second image;
- affine transformation of said first image and/or said second image;
- mapping the boundaries of said first image to the boundaries in said second image or vice versa;
- interpolating the interior part within said boundaries of said first image and/or said second image;
- additional mapping of said corresponding regions of interest; and interpolating the remaining areas in the image
- higher-order deformable or elastic transformation of the first image to the second image or vice versa.

6. The method for processing and presenting at least a first image and a second image according to claim 1, wherein said method further comprises the step of determining statistical information and/or measurements related to said region in said first image or said first registered image and said corresponding region in said second image or said second registered image.

7. The method for processing and presenting at least a first image and a second image according to claim 6 wherein said method further comprises the step of presenting said statistical information and/or said measurements in conjunction with said first magnification and/or said second magnification.

8. The method for processing and presenting at least a first image and a second image according to claim 1 wherein said method further comprises the step of receiving user input for selecting said region in said first image or said first registered image.

9. The method for processing and presenting at least a first image and a second image according to claim 1 wherein said method further comprises the step of iteratively presenting a region in said first image or said first registered image and a corresponding region in said second image or said second registered image, said region in said first image or said first registered image being automatically selected from a list of regions in said first image or said first registered image.

10. The method for processing and presenting at least a first image and a second image according to claim 1 wherein said method further comprises the step of automatically moving said region in said first image or said first registered image and presenting said corresponding region in said second image or said second registered image.

11. The method for processing and presenting at least a first image and a second image according to claim 1 wherein said medical digital images are one or more of the following:
- temporal mammography images;
- a left and a right breast mammography image;
- Cranio-Caudal projections of a breast;
- Medio-Lateral Oblique projections of a breast;
- a registered version of said first image and/or a registered version of said second image obtained by applying said pixel-level mapping to said first image and/or said second image respectively.

12. A device for presenting at least a first image and a second image, said images being digital medical images and said device comprising:
- means for presenting said first image and said second image on a display;
- means for presenting a first magnification of a region in said first image and presenting a second magnification of a corresponding region in said second image wherein said corresponding region is determined based on a pixel-level mapping.

13. The device for presenting at least a first image and a second image according to claim 12 wherein said device further comprises:means for performing image registration between said first image and said second image to generate a pixel-level mapping between said first image and said second image

14. The device for presenting at least a first image and a second image according to claim 12 wherein said device further comprises means for receiving information related to said pixel-level mapping between said first image and said second image.

15. The device for presenting at least a first image and a second image according to claim 12 wherein said device further comprises means for receiving information related to the detection of regions of interest in said first image and/or said second image and/or information related to the correspondence of said regions of interest in said first image and/or said second image.

## Amended claims

### Amended claims in accordance with Rule 137(2) EPC.

**1.** A method for processing and presenting at least a first image (102) and a second image (103), said first image (102) and said second image (103) being digital medical images, said method comprising the steps of:
- performing image registration between said first image (102) and said second image (103) to generate a pixel-level mapping between said first image (102) and said second image (103);
- presenting said first image (102) and said second image (103) simultaneously on a display (101);
- detecting a region of interest (106) in said first image (102); and
- presenting a first magnification (104) of said region of interest (106) in said first image (102) and a second magnification (105) of a corresponding region (108) in said second image (103), said corresponding region (108) in said second image (103) being determined based on said pixel-level mapping,
**CHARACTERIZED IN THAT** said method further comprises:
- determining for said pixel-level mapping a region-level correspondence between said first image (102) and said second image (103).

**2.** The method for processing and presenting at least a first image (102) and a second image (103) according to claim 1 wherein said regions of interest comprise one or more of the following:
- a micro-calcification;
- a cluster of micro-calcifications; and
- a mass.

**3.** The method for processing and presenting at least a first image (102) and a second image (103) according to claim 1 wherein said mapping of said regions of interest is based on one or more of the following:
- Markov Random Field graph matching;
- a feature-based comparison algorithm; and
- a probabilistic comparison algorithm.

**4.** The method for processing and presenting at least a first image (102) and a second image (103) according to claim 1 wherein said image registration comprises one or more of the following:
- mapping the boundaries of said first image (102) to the boundaries in said second image (103) or vice versa;
- interpolating the interior part within said boundaries of said first image (102) and/or said second image (103);
- additional mapping of said corresponding regions of interest; and interpolating the remaining areas in the image.

**5.** The method for processing and presenting at least a first image (102) and a second image (103) according to claim 1 wherein said image registration comprises one or more of the following:
- vertical alignment of said first image (102) and said second image (103);
- affine transformation of said first image (102) and/or said second image (103);
- higher-order deformable or elastic transformation of the first image (102) to the second image (103) or vice versa.

**6.** The method for processing and presenting at least a first image (102) and a second image (103) according to claim 1, wherein said method further comprises the step of determining statistical information (111) and/or measurements related to said region (106) in said first image (102) or a first registered image and said corresponding region (108) in said second image (103) or a second registered image.

**7.** The method for processing and presenting at least a first image (102) and a second image (103) according to claim 6 wherein said method further comprises the step of presenting said statistical information (111, 112) and/or said measurements in conjunction with said first magnification (104) and/or said second magnification (105).

**8.** The method for processing and presenting at least a first image (102) and a second image (103) according to claim 1 wherein said method further comprises the step of receiving user input for selecting said region (106) in said first image (102) or a first registered image.

**9.** The method for processing and presenting at least a first image (102) and a second image (103) according to claim 1 wherein said method further comprises the step of iteratively presenting a region in said first image (102) or a first registered image and a corresponding region in said second image (103) or a second registered image, said region in said first image (102) or said first registered image being automatically selected from a list of regions in said first image (102) or said first registered image.

**10.** The method for processing and presenting at least a first image (102) and a second image (103) according to claim 1 wherein said method further comprises the step of automatically moving said region in said first image (102) or a first registered image and presenting said corresponding region in said second image (103) or a second registered image.

**11.** The method for processing and presenting at least a first image (102) and a second image (103) according to claim 1 wherein said medical digital images are one or more of the following:
- temporal mammography images;
- a left and a right breast mammography image;
- Cranio-Caudal projections of a breast;
- Medio-Lateral Oblique projections of a breast;
- a registered version of said first image (102) and/or a registered version of said second image (103) obtained by applying said pixel-level mapping to said first image (102) and/or said second image (103) respectively.

**12.** A device for presenting at least a first image (102) and a second image (103), said images being digital medical images and said device comprising:
- means for performing image registration between said first image (102) and said second image (103) to generate a pixel-level mapping between said first image (102) and said second image (103);
- means for presenting said first image (102) and said second image (103) simultaneously on a display (101);
- means for receiving information related to the detection of a region of interest (106) in said first image (102);
- means for presenting a first magnification (104) of said region of interest (106) in said first image (102) and presenting a second magnification (105) of a corresponding region (108) in said second image (103) wherein said corresponding region is determined based on said pixel-level mapping,
**CHARACTERIZED IN THAT** said device further comprises:
- means for determining for said pixel-level mapping a region-level correspondence between said first image (102) and said second image (103).
